# EUROPÄISCHE PATENTSCHRIFT

(11) **EP 2 950 955 B1**
(45) Veröffentlichungstag und Bekanntmachung des Hinweises auf die Patenterteilung: **14.10.2020**
(21) Anmeldenummer: 14703303.9
(22) Anmeldetag: 30.01.2014
(51) Int. Cl.: B23B 31/11, B23D 77/00, B23Q 11/10, B23C 5/28

(54) **WERKZEUGAUFNAHME FÜR EIN WERKZEUG MIT EINEM MIT EINEM AUSSENGEWINDE VERSEHENEN WERKZEUGSCHAFT**
TOOL HOLDER FOR A TOOL HAVING A SHAFT WITH AN EXTERNAL THREAD
PORTE-OUTIL POUR UN OUTIL POURVU D'UNE TIGE À FILETAGE EXTÉRIEUR

(30) Priorität: 30.01.2013 DE 102013100939
(43) Veröffentlichungstag der Anmeldung: 09.12.2015
(73) Patentinhaber: Franz Haimer Maschinenbau KG, 86568 Hollenbach-Igenhausen (DE)
(72) Erfinder: HAIMER, Andreas, 86568 Igenhausen (DE)
(74) Vertreter: Schwarz, Wolfgang
(86) Internationale Anmeldenummer: PCT/EP2014/051777
(87) Internationale Veröffentlichungsnummer: WO 2014/118264

(56) Entgegenhaltungen:
- WO-A1-02/05996
- WO-A1-2007/031256
- WO-A1-2013/117431
- WO-A1-2013/178401
- WO-A2-2009/140109
- BE-A- 659 305
- DE-A1-102004 054 550
- DE-A1-102010 028 561
- DE-B- 1 266 613
- DE-B3-102009 048 010
- US-A- 2 079 692

## Beschreibung

Die Erfindung betrifft eine Werkzeugaufnahme für ein Einschraubwerkzeug gemäß dem Oberbegriff des Anspruchs 1 und eine Werkzeuganordnung mit einer derartigen Werkzeugaufnahme.

Aus der DE 10 2004 054 550 A1 ist eine Werkzeugaufnahme für ein Einschraubwerkzeug mit einem Aufnahmekörper gemäß dem Oberbegriff des Anspruchs 1 bekannt, der ein Aufnahmeteil mit einer Aufnahmeöffnung und einem Innengewinde und ein auf dem Ausnahmeteil befestigtes hülsenförmiges Führungsteil enthält. An dem hülsenförmigen Führungsteil ist ein Abstützbereich mit einer ersten Führungsfläche und einer zweiten Führungsfläche zur positionsgenauen Aufnahme des Einschraubwerkzeugs vorgesehen.

Aufgabe der Erfindung ist es, eine Werkzeugaufnahme der eingangs genannten Art und eine Werkzeuganordnung mit einer derartigen Werkzeugaufnahme zu schaffen, die eine positionsgenaue und reproduzierbare Verbindung zwischen dem Aufnahmeteil und dem hülsenförmigen Führungsteil ermöglichen.

Diese Aufgabe wird durch eine Werkzeugaufnahme mit den Merkmalen des Anspruchs 1 und durch eine Werkzeuganordnung mit den Merkmalen des Anspruchs 14 gelöst. Zweckmäßige Weiterbildungen und vorteilhafte Ausführungsformen der Erfindung sind Gegenstand der Unteransprüche.

Bei der erfindungsgemäßen Werkzeugaufnahme wird der Aufnahmekörper durch ein Aufnahmeteil und ein auf dem Aufnahmeteil befestigtes Führungsteil gebildet, an dem ein Abstützbereich mit zwei Führungsflächen vorgesehen ist. Durch das Führungsteil kann eine Verstärkung des Aufnahmeteils erreicht werden. Außerdem kann durch den zweiteiligen Aufbau des Aufnahmekörpers ein Mikro-Gleiten und zwischen dem Aufnahmeteil und dem Führungsteil entstehen, wodurch Vibrationen gedämpft oder absorbiert werden können. Das Führungsteil, das für die positionsgenaue Aufnahme des Einschraubwerkzeugs in der Werkzeugaufnahme sorgt, kann in einer bevorzugten Ausführungsform lösbar am Aufnahmeteil befestigt sein, so dass es bei Bedarf einfach ausgetauscht werden kann. Selbst bei Beschädigungen der Führungsfläche kann die Werkzeugaufnahme nach einem einfachen Austausch des Führungsteils weiterverwendet werden. Der Abstützbereich an dem Führungsteil wird durch eine erste und zweite Führungsfläche gebildet. Dadurch wird eine doppelte Führung und genauere Positionierung des Einschraubwerkzeugs in der Werkzeugaufnahme ermöglicht. Das Führungsteil kann auf einen zylindrischen Abschnitt am vorderen Ende des Aufnahmeteils aufgesteckt werden weist an seinem vorderen Ende eine Abstufung mit einer hinteren Anlagefläche zur Anlage an einer vorderen Stirnfläche des Aufnahmeteils aufweisen.

Das Aufnahmeteil besteht vorzugsweise aus Hartmetall oder einem anderen spröden und harten Material, während das austauschbare Führungsteil aus Stahl oder einem anderen zähen Werkstoff besteht. Dadurch kann die Werkzeugaufnahme steif ausgeführt werden und ist im Bereich der Führung dennoch unempfindlicher gegen Stöße. Durch die größere Elastizität des Führungsteils können Schwingungen gedämpft und Ungenauigkeiten besser ausgeglichen werden. Das Einschraubwerkzeug kann außerdem mit einer höheren Anzugskraft in die Werkzeugaufnahme eingeschraubt werden, wodurch die Genauigkeit verbessert werden kann. Das Aufnahmeteil kann aber auch aus Schwermetall, aus verschiedenen Legierungen mit schwingungsdämpfendem Verhalten oder aus Kunststoff, insbesondere Faserverbundwerkstoff, bestehen.

Die erste Führungsfläche und die zweite Führungsfläche können in zweckmäßiger Weise als konische Flächen mit unterschiedlichen Kegelwinkeln ausgebildet sein. Dadurch wird ein Abstützbereich mit einem Doppelkonus geschaffen, der gegenüber einer Plananlage oder einer geraden Anlagefläche eine vergrößerte Auflagefläche und eine verbesserte Zentrier- und Abstützwirkung ermöglicht. Die beiden Führungsflächen können zur radialen und axialen Positionierung aber auch parallel bzw. senkrecht zu der Längsachse des Führungsteils verlaufen.

Die an den Werkzeugkopf des Einschraubwerkzeugs angrenzende erste Führungsfläche an dem Führungsteil und die dazu korrespondierende erste Anlagefläche des Einschraubwerkzeugs weisen vorzugsweise einen relativ großen Kegelwinkel zwischen 140° und 179° auf. Hier hat sich ein Kegelwinkel von 170° als günstig herausgestellt. Die zweite Führungsfläche an dem Führungsteil und die dazugehörige zweite Anlagefläche an dem Einschraubwerkzeug weisen vorzugsweise relativ kleine Kegelwinkel zwischen 90° und 1° auf. Hier hat sich ein Kegelwinkel von 10° als günstig herausgestellt. Ein Doppelkonus der beschriebenen Art hat den Vorteil, dass der kleine Kegelwinkel eine gute Zentrierung des Einschraubwerkzeugs bei stark reduzierten Aufspreizkräften an der Werkzeugaufnahme und der große Kegelwinkel eine zusätzliche Zentrierung ermöglicht. Unter dem Kegelwinkel ist der Öffnungswinkel des durch die konischen Führungsflächen gebildeten Kegels zu verstehen.

Das Führungsteil kann zweckmäßigerweise auf das Aufnahmeteil aufgepresst, aufgeschrumpft oder mit diesem über eine Gewindeverbindung verbunden sein. Dadurch wird das Führungsteil sicher auf dem Aufnahmeteil gehalten, kann jedoch bei Bedarf einfach ausgetauscht werden. Das Führungsteil und das Aufnahmeteil können aber auch auf andere geeignete Weise lösbar oder fest miteinander verbunden sein. Das Führungsteil kann ein- oder mehrteilig ausgebildet sein. In einer zweiteiligen Ausführung kann das Führungsteil z.B. in einem vorderen Aufnahmebereich aus einem zähen Material, vorzugsweise Stahl, und in einem hinteren Bereich aus einem anderen Material, z.B. einem Faserverbundwerkstoff, bestehen.

Das Führungsteil kann auf einen zylindrischen Abschnitt am vorderen Ende des Aufnahmeteils aufgesteckt werden und kann eine Abstufung mit einer hinteren Anlagefläche zur Anlage an einer vorderen Stirnfläche des Aufnahmeteils aufweisen. Das Führungsteil kann aber auch über eine konische Verbindung mit dem Aufnahmeteil verbunden sein.

Das Innengewinde kann als konisches Innengewinde ausgebildet sein. Das Innengewinde kann aber auch als zylindrisches Innengewinde ausgeführt sein.

Die Erfindung betrifft außerdem eine Werkzeuganordnung mit einem Einschraubwerkzeug und einer vorstehend beschriebenen Werkzeugaufnahme. Das Einschraubwerkzeug weist zweckmäßigerweise mindestens eine Anlagefläche zur Anlage an der mindestens einen Führungsfläche am vorderen Führungsteil der Werkzeugaufnahme auf.

In einer weiteren vorteilhaften Weise ist am inneren Ende der Aufnahmeöffnung der Werkzeugaufnahme und entsprechend am hinteren Ende des Werkzeugschafts ein weiterer Abstützbereich mit einer inneren Anlagefläche zur Anlage einer Abstützfläche am hinteren Ende des Werkzeugschafts vorgesehen ist Die Abstützfläche am hinteren Ende des Werkzeugschafts kann z.B. kugelförmig ausgebildet sein, während der dazugehörige weitere Auflagebereich an der Werkzeugaufnahme als zylindrische Auflagefläche ausgeführt sein kann. Durch den kugelförmigen Anlagebereich und die zylindrische Auflagefläche wird in diesen Bereich eine nur partielle Berührung zwischen dem Einschraubwerkzeug und der Werkzeugaufnahme erreicht. Zweckmäßigerweise weist der Werkzeugschaft im Bereich der Abstützfläche ein Übermaß gegenüber der zylindrischen Anlagefläche auf, so dass die Vorspannung in diesem zweiten Abstützbereich unabhängig von der Einschraubtiefe ist. Es sind aber auch andere Ausgestaltungen des weiteren Abstützbereichs denkbar. So können an dem Werkzeug und der Werkzeugaufnahme auch in beliebiger Kombination kugelförmige, konische oder zylindrische Anlageflächen bzw. Auflageflächen vorgesehen sein.

Für das Außengewinde und das entsprechende Innengewinde haben sich Trapezgewinde oder Flachgewinde als besonders zweckmäßig erwiesen. Die Gewinde können aber auch als Spitzgewinde, Rundgewinde, Sägezahngewinde oder dgl. ausgebildet sein.

Um die Herstellung des Einschraubwerkzeugs zu vereinfachen, kann am Werkzeugschaft eine Greiferrille zum Einspannen des Einschraubwerkzeugs vorgesehen sein. In die Greiferrille können z.B. zangenförmige Greiferelemente einer Spannvorrichtung zum Spannen des Werkzeugs in der Werkzeugaufnahme eingreifen. Beim Spannen mit Hilfe der Greiferrille können Werkzeug und Werkzeughalter mit einer Verdrehsicherung versehen sein.

Weitere Besonderheiten und Vorzüge der Erfindung ergeben sich aus der folgenden Beschreibung bevorzugter Ausführungsbeispiele anhand der Zeichnungen. Es zeigen:
- **Figur 1**: eine Werkzeugaufnahme und ein Einschraubwerkzeug in einem Längsschnitt;
- **Figur 2**: die Werkzeugaufnahme und das Einschraubwerkzeug von Figur 1 in einer Perspektive.
- **Figur 3**: ein zweites Ausführungsbeispiel einer Werkzeugaufnahme mit einem Einschraubwerkzeug im Schnitt;
- **Figur 4**: ein drittes Ausführungsbeispiel einer Werkzeugaufnahme mit einem Einschraubwerkzeug im Schnitt und
- **Figur 5**: ein viertes Ausführungsbeispiel einer Werkzeugaufnahme mit einem Einschraubwerkzeug im Schnitt.

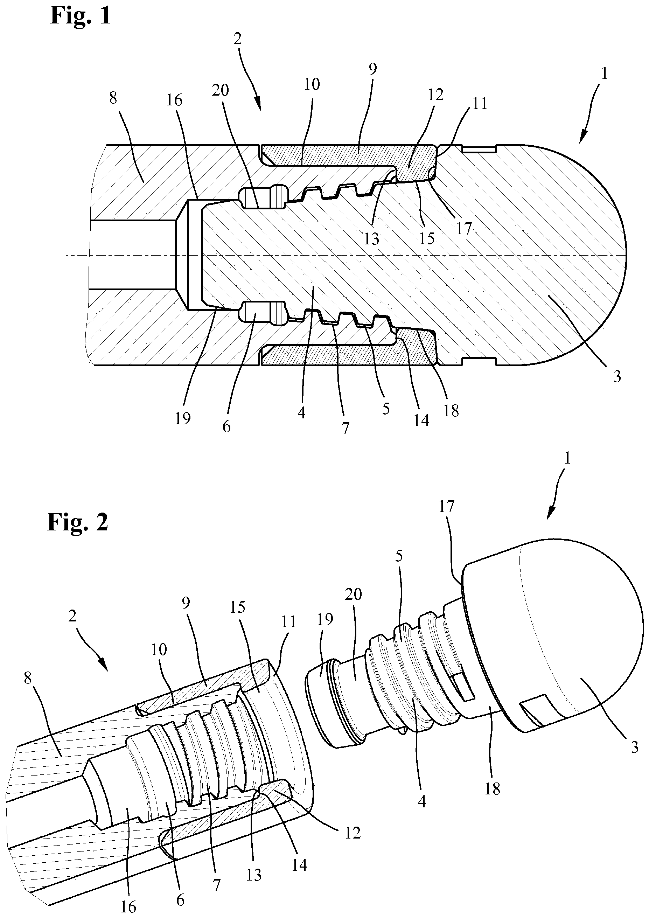

In den Figuren 1 und 2 ist eine Werkzeuganordnung mit einem Einschraubwerkzeug 1 und einer zugehörigen Werkzeugaufnahme 2 in einem Längsschnitt und einer Perspektivansicht gezeigt. Das Einschraubwerkzeug 1 weist einen hier als Kugelkopffräser ausgebildeten Werkzeugkopf 3 und einen Werkzeugschaft 4 mit einem Außengewinde 5 auf. Die zu dem Einschraubwerkzeug 1 gehörende Werkzeugaufnahme 2 enthält einen Aufnahmekörper, in dem eine Aufnahmeöffnung 6 mit einem Innengewinde 7 vorgesehen ist. Das Innengewinde 7 ist zum Einschrauben des Einschraubwerkzeugs 1 an dessen Außengewinde 5 angepasst.

Der Aufnahmekörper der Werkzeugaufnahme 2 umfasst ein hohlzylindrisches hinteres Aufnahmeteil 8 und ein auf dem Aufnahmeteil 8 lösbar befestigtes vorderes Führungsteil 9. In dem hinteren Aufnahmeteil 8 ist das Innengewinde 7 angeordnet. Das hülsenförmige vordere Führungsteil 9 kann z.B. auf das hintere Aufnahmeteil 8 aufgepresst oder aufgeschrumpft sein. Das hintere Aufnahmeteil 8 besteht vorzugsweise aus Hartmetall, während das hülsenförmige vordere Führungsteil 9 vorzugsweise aus Stahl besteht. Zur positionsgenauen Aufnahme des Einschraubwerkzeugs 1 weist das auf einen zylindrischen Abschnitt 10 am vorderen Ende des Aufnahmeteils 8 aufgesetzte Führungsteil 9 an seiner vorderen Stirnseite eine erste Führungsfläche 11 auf. Das Führungsteil 9 enthält am vorderen Ende ferner eine Abstufung 12, an der eine hintere Anlagefläche 13 zur Anlage an einer vorderen Stirnfläche 14 des Aufnahmeteils 8 und eine zweite Führungsfläche 15 zur Führung des Einschraubwerkzeugs 1 vorgesehen sind.

Die Aufnahmeöffnung 6 der Werkzeugaufnahme 2 enthält bei dem in der Zeichnung dargestellten Ausführungsbeispiel einen sich nach innen konisch verjüngenden vorderen Bereich mit dem ebenfalls konischen Innengewinde 7 und einen zylindrischen inneren Bereich mit einer zylindrischen inneren Anlagefläche 16.

In der gezeigten Ausführung verläuft der Werkzeugschaft 4 des Einschraubwerkzeugs 1 nach hinten konisch und das Außengewinde 5 ist ebenfalls konisch ausgeführt. Zwischen dem Werkzeugkopf 3 und dem Außengewinde 5 ist ein erster Abstützbereich mit einer ersten Anlagefläche 17 zur Anlage an der ersten Führungsfläche 11 des Führungsteils 9 und einer zweiten Anlagefläche 18 zur Anlage an der zweiten Führungsfläche im Inneren des Führungsteils 9 vorgesehen. Die erste und zweite Führungsfläche 11 bzw. 15 am Führungsteil 9 und die entsprechenden Anlageflächen 17 bzw. 18 am Einschraubwerkzeug 1 sind vorzugsweise als konische Flächen mit unterschiedlichen Kegelwinkeln ausgeführt. Dadurch wird ein Abstützbereich mit einem Doppelkonus geschaffen, der gegenüber einer Plananlage oder einer geraden Anlagefläche eine vergrößerte Auflagefläche und eine verbesserte Zentrier- und Abstützwirkung ermöglicht.

Bei der in den Figuren 1 und 2 dargestellten Ausführung weist das Einschraubwerkzeug 1 an den ersten Anlageflächen 17 einen Kegelwinkel von 170° und an den zweiten Anlageflächen 18 einen Kegelwinkel von 10° auf. Die dazugehörigen Führungsflächen 11 und 15 an dem Führungsteil 11 weisen entsprechende Kegelwinkel auf. Ein Doppelkonus der beschriebenen Art hat den Vorteil, dass der kleine Kegelwinkel eine gute Zentrierung des Einschraubwerkzeugs in der Werkzeugaufnahme und der große Kegelwinkel eine zusätzliche Zentrierung aber mit stark reduzierten Aufspreizkräften an der Werkzeugaufnahme ermöglicht. Zudem wird durch die konische erste Anlagefläche die Steifigkeit des Werkzeugs erhöht, da das Werkzeug bei radialer Belastung nicht abgleiten kann, wie das bei einer planen Anlagefläche der Fall ist. Das Außengewinde 5 am Einschraubwerkzeug 1 und das entsprechende Innengewinde 7 an der Werkzeugaufnahme 2 sind als Trapezgewinde mit unterschiedlichen Flankenwinkeln ausgeführt. Das Außengewinde 5 und das Innengewinde 7 können aber auch eine andere Gewindeform haben.

An dem inneren Ende der Aufnahmeöffnung 6 befindet sich ein weiterer Abstützbereich mit der zylindrischen Anlagefläche 16, an der eine kugelförmige bzw. abgerundete äußere Abstützfläche 19 am hinteren Ende des Werkzeugschafts 4 zur Anlage gelangt. Durch den weiteren Abstützbereich des Einschraubwerkzeugs 1 wird eine weitere Führung des Einschraubwerkzeugs 1 innerhalb der Werkzeugaufnahme 2 erreicht. Die kugelförmige bzw. abgerundete Abstützfläche 19 sorgt für eine nur partielle Berührung zwischen dem Einschraubwerkzeug 1 und der Werkzeugaufnahme 2 in diesem Bereich. Zweckmäßigerweise weist der Werkzeugschaft 4 im Bereich der Abstützfläche 19 ein Übermaß gegenüber der zylindrischen Anlagefläche 16 auf, so dass die Vorspannung in diesem zweiten Abstützbereich unabhängig von der Einschraubtiefe ist.

Um die Herstellung des Einschraubwerkzeugs zu vereinfachen, kann am Werkzeugschaft 4 eine Greiferrille 20 zum Einspannen des Einschraubwerkzeugs vorgesehen sein. In die Greiferrille können z.B. zangenförmige Greiferelemente einer Spannvorrichtung zum Spannen des Werkzeugs eingreifen.

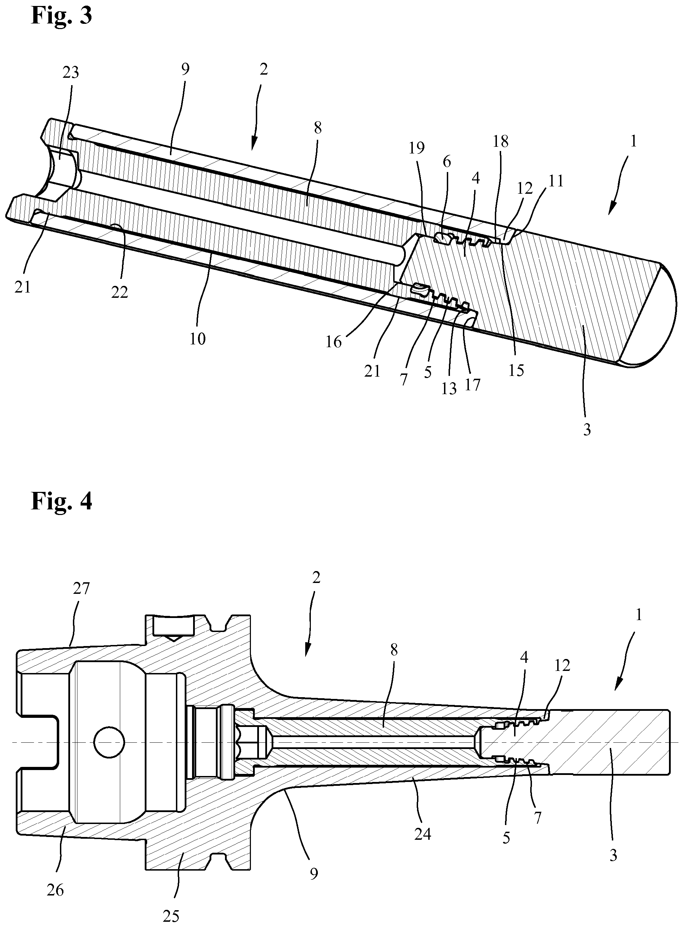

In der Figur 3 ist ein weiteres Ausführungsbeispiel einer Werkzeuganordnung mit einem Einschraubwerkzeug 1 und einer zugehörigen Werkzeugaufnahme 2 gezeigt. Das Einschraubwerkzeug 1 weist hier einen zylindrischen Werkzeugkopf 3 und einen Werkzeugschaft 4 mit einem Außengewinde 5 auf. Die zu dem Einschraubwerkzeug 1 gehörende Werkzeugaufnahme 2 enthält einen Aufnahmekörper, der ein hier als Gewindeeinsatz ausgebildetes hohlzylindrisches Aufnahmeteil 8 und ein auf dem Aufnahmeteil 8 lösbar befestigtes hülsenförmiges Führungsteil 9 umfasst. Das hohlzylindrische Aufnahmeteil 8 enthält einen zylindrischen Abschnitt 10 mit zwei in Axialrichtung voneinander beabstandeten Abstützbereichen 21, die bei der gezeigten Ausführung als Außengewindeabschnitte ausgebildet sind. Über diese ist das mit einem Innengewinde 22 versehene hülsenförmige Führungsteil 9 auf den zylindrischen Abschnitt 10 aufgeschraubt und abgestützt. Die bei der gezeigten Ausführung im vorderen und hinteren Teil des zylindrischen Abschnittes 10 angeordneten Abstützbereiche 21 können auch frei über die Länge des Abschnittes 10 verteilt sein. Die Abstützbereiche 21 sind in der Zeichnung geschlossen ringförmig um das Aufnahmeteil angeordnet, können aber auch als Segmente oder dgl. ausgeführt sein. Das Aufnahmeteil 8 hat an dem einen Ende die Aufnahmeöffnung 6 mit dem Innengewinde 7 und an dem anderen Ende einen Innensechskant 23. Das als Gewindeeinsatz ausgebildete Aufnahmeteil 8 kann aus Schwer- oder Hartmetall, aus verschiedenen Legierungen mit schwingungsdämpfendem Verhalten und aus Kunststoffen, insbesondere Faserverbundwerkstoffen, bestehen.

Zur positionsgenauen Aufnahme des Einschraubwerkzeugs 1 weist das Führungsteil 9 auch bei dieser Ausführung an seiner vorderen Stirnseite eine erste Führungsfläche 11 auf. Das Führungsteil 9 enthält am vorderen Ende ferner eine Abstufung 12, an der eine zweite innere Führungsfläche 15 zur Führung des Einschraubwerkzeugs 1 vorgesehen ist.

Wie bei der Ausführungsform der Figuren 1 und 2 enthält die Aufnahmeöffnung 6 der Werkzeugaufnahme 2 bei dem in Figur 3 dargestellten Ausführungsbeispiel einen sich nach innen konisch verjüngenden vorderen Bereich mit dem ebenfalls konischen Innengewinde 7 und einen zylindrischen inneren Bereich mit einer zylindrischen inneren Anlagefläche 16, an der eine kugelförmige bzw. abgerundete äußere Abstützfläche 19 am hinteren Ende des Werkzeugschafts 4 zur Anlage gelangt.

In der Ausführung von Figur 3 verläuft der Werkzeugschaft 4 des Einschraubwerkzeugs 1 auch nach hinten konisch und das Außengewinde 5 ist ebenfalls konisch ausgeführt. Zwischen dem Werkzeugkopf 3 und dem Außengewinde 5 ist ein erster Abstützbereich mit einer ersten Anlagefläche 17 zur Anlage an der ersten Führungsfläche 11 des Führungsteils 9 und einer zweiten Anlagefläche 18 zur Anlage an der zweiten Führungsfläche im Inneren des Führungsteils 9 vorgesehen. Die erste und zweite Führungsfläche 11 bzw. 15 am Führungsteil 9 und die entsprechenden Anlageflächen 17 bzw. 18 am Einschraubwerkzeug 1 sind vorzugsweise als konische Flächen mit unterschiedlichen Kegelwinkeln ausgeführt. Dadurch wird ein Abstützbereich mit einem Doppelkonus geschaffen, der gegenüber einer Plananlage oder einer geraden Anlagefläche eine vergrößerte Auflagefläche und eine verbesserte Zentrier- und Abstützwirkung ermöglicht.

Das in Figur 4 gezeigte Ausführungsbeispiel unterscheidet sich von der Ausführung gemäß Figur 3 lediglich dadurch, dass das Führungsteil 9 in Form eines mit einer Schnittstelle zur Aufnahme in einer Arbeitsspindel einer Werkzeugmaschine versehenen Werkzeugaufnahmekörpers ausgebildet ist. Bei der gezeigten Ausführung ist das Führungsteil 9 z.B. als HSK-Werkzeugaufnahmekörper mit einem konischen vorderen Aufnahmebereich 24, einem zylindrischen Zwischenbereich 25 und einem konischen hinteren Aufnahmebereich 26 mit einer konischen äußeren Spannfläche 27 zur Aufnahme in einer Arbeitsspindel einer Werkzeugmaschine ausgeführt. Das Führungsteil 9 kann aber auch zweiteilig ausgebildet oder aus mehr als zwei Teilen bestehen. So kann z.B. das Führungsteil 9 im vorderen Aufnahmebereich (also dem Bereich mit bzw. um das Gewinde) aus einem zähen Material, vorzugsweise Stahl, und im hinteren Bereich aus einem beliebigen anderen Material, etwa einem Faserverbundstoff wie CFK, bestehen. Anstelle der HSK-Schnittstelle können an dem Werkzeugaufnahmekörper auch SK-, JIS, BT-, ABS-, Capto- oder andere geeignete Schnittstellen vorgesehen sein. Das als Gewindeeinsatz ausgebildete hohlzylindrische Aufnahmeteil 8 entspricht der Ausführung von Figur 3 und ist mit dem hier als Werkzeugaufnahmekörper ausgebildeten Führungsteil 9 verschraubt.

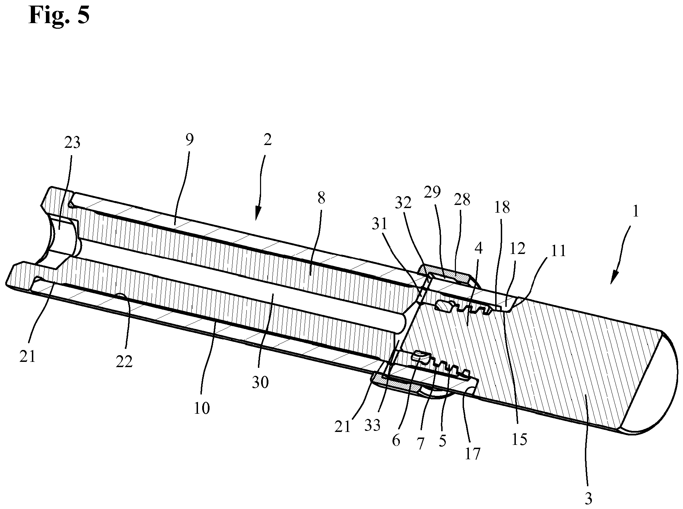

Figur 5 zeigt ein weiteres Ausführungsbeispiel einer Werkzeuganordnung, die im Wesentlichen der Ausführung von Figur 3 entspricht. Im Unterschied zur Ausführung von Figur 3 ist auf der Außenseite des Führungsteils 9 eine Hülse 28 mit einem inneren Kühlmittelkanal 29 zur Führung eines Kühlmittels zur Außenseite des Werkzeugs 1 angeordnet. Der Kühlmittelkanal 29 ist an der Rückseite geschlossen und an der zum Werkzeug 1 gewandten Vorderseite offen und derart ausgestaltet, dass ein in den Kühlmittelkanal 29 der Hülse 28 eingeleitetes Kühlmittel zum Schnittbereich zwischen Werkstück und Werkzeug geleitet werden kann. Zur Einleitung eines Kühlmittels in den Kühlmittelkanal 29 sind im Aufnahmeteil 8 von einem zentralen Zuleitungskanal 30 abzweigende und zur Außenseite des Aufnahmeteils 8 führende erste Querbohrungen 31 und im Führungsteil 9 mit den ersten Querbohrungen 31 fluchtende und die in den Kühlmittelkanal 29 der Hülse 28 mündende zweite Querbohrungen 32 angeordnet. Bei der gezeigten Ausführung sind jeweils zwei diametral gegenüberliegende Querbohrungen 31 und 32 vorgesehen. Selbstverständlich können aber auch nur jeweils eine oder mehr als zwei, über den Umfang verteilte Querbohrungen 31 und 32 vorhanden sein. Ansonsten ist diese Ausführung entsprechend der Ausführung von Figur 3 aufgebaut, wobei einander entsprechende Bauteile mit denselben Bezugszeichen versehen sind und bezüglich deren Erläuterung auf die Beschreibung zu Figur 3 verwiesen wird.

Bei der in Figur 5 gezeigten Ausführung ist der zentrale Zuleitungskanal 30 in dem Aufnahmeteil 8 als Durchgangskanal ausgebildet, der in einen Verteilertraum 33 am Ende der Aufnahmeöffnung 6 endet. Dadurch kann das Kühlmittel auch bis zum Einschraubbereich des Werkzeugs gelangen. Dieser wird entweder durch den Schaft des eingeschraubten Werkzeugs verschlossen oder das Kühlmittel kann durch zusätzliche Kühlbohrungen in dem Werkzeug zu dessen Werkzeugkopf gelangen. Der Zuleitungskanal 30 muss aber nicht bis zum Einschraubbereich reichen. Er kann auch schon vorher in den, in diesem Fall weiter hinten liegenden Querbohrungen 31 enden, die dann keine Verbindung zum Einschraubbereich haben. Dadurch kann verhindert werden, dass ein Kühl- bzw. Schniermittel zum Einschraubbereich gelangt.

Die Erfindung ist nicht auf die vorstehend beschriebenen und in der Zeichnung dargestellten Ausführungsbeispiele beschränkt. So kann z.B. in der Werkzeugaufnahme auch eine Einsatzbuchse vorgesehen sein. Diese Einsatzbuchse kann dann das Gewinde oder auch Führungsflächen enthalten. Durch die Wahl eines geeigneten Materials für die Einsatzbuchse kann eine Schwingungsdämpfung erreicht werden. Zudem kann der Werkzeughalter durch verschiedene Einsatzbuchsen für die Aufnahme von unterschiedlichen Geometrien von Werkzeugen angepasst werden. Die Einsatzbuchse kann aus einem Teil oder aus mehreren Teilen bestehen, die auch aus unterschiedlichen Materialien bestehen können.

## Patentansprüche

1. Werkzeugaufnahme (2) für ein Einschraubwerkzeug (1) mit einem Aufnahmekörper, der ein Aufnahmeteil (8) mit einer Aufnahmeöffnung (6) und einem Innengewinde (7) und ein auf dem Aufnahmeteil (8) befestigtes hülsenförmiges Führungsteil (9) enthält, an dem ein Abstützbereich mit einer ersten Führungsfläche (11) und einer zweiten Führungsfläche (15) zur positionsgenauen Aufnahme des Einschraubwerkzeugs (1) in der Werkzeugaufnahme (2) vorgesehen ist, **dadurch gekennzeichnet, dass** das hülsenförmige Führungsteil (9) an seinem vorderen Ende eine Abstufung (12) enthält, an der eine hintere Anlagefläche (13) zur Anlage an einer vorderen Stirnfläche (14) des Aufnahmeteils (8) vorgesehen ist.

2. Werkzeugaufnahme nach Anspruch 1, **dadurch gekennzeichnet, dass** das Führungsteil (9) lösbar auf dem Aufnahmeteil (8) befestigt ist.

3. Werkzeugaufnahme nach Anspruch 1 oder 2, **dadurch gekennzeichnet, dass** das Aufnahmeteil (8) aus Hartmetall, Schwermetall, aus verschiedenen Legierungen mit schwingungsdämpfendem Verhalten oder aus Kunststoff, insbesondere Faserverbundwerkstoff, besteht.

4. Werkzeugaufnahme nach einem der Ansprüche 1 bis 3, **dadurch gekennzeichnet, dass** das Führungsteil (9) ein- oder mehrteilig ausgebildet ist.

5. Werkzeugaufnahme nach einem der Ansprüche 1 bis 4, **dadurch gekennzeichnet, dass** das Führungsteil (9) zumindest teilweise aus Stahl besteht.

6. Werkzeugaufnahme nach einem der Ansprüche 1 bis 5, **dadurch gekennzeichnet, dass** die erste Führungsfläche (11) und die zweite Führungsfläche (15) als konische Flächen mit unterschiedlichen Kegelwinkeln ausgebildet sind.

7. Werkzeugaufnahme nach Anspruch 6, **dadurch gekennzeichnet, dass** die erste Führungsfläche (11) einen Kegelwinkel zwischen 140° und 179° und die zweite Führungsfläche einen Kegelwinkel zwischen 90° und 1° aufweist.

8. Werkzeugaufnahme nach einem der Ansprüche 1 bis 7, **dadurch gekennzeichnet, dass** das Führungsteil (9) auf das Aufnahmeteil (8) aufgepresst, aufgeschrumpft oder durch eine Gewindeverbindung mit diesem verbunden ist.

9. Werkzeugaufnahme nach einem der Ansprüche 1 bis 8, **dadurch gekennzeichnet, dass** das Innengewinde (7) als konisches Innengewinde ausgebildet ist.

10. Werkzeugaufnahme nach einem der Ansprüche 1 bis 9, **dadurch gekennzeichnet, dass** am inneren Ende der Aufnahmeöffnung (6) ein weiterer Abstützbereich mit einer inneren Anlagefläche (16) für das Einschraubwerkzeug (1) vorgesehen ist.

11. Werkzeugaufnahme nach einem der Ansprüche 1 bis 10, **dadurch gekennzeichnet, dass** das Führungsteil (9) in Form eines mit einer Schnittstelle zur Aufnahme in einer Arbeitsspindel einer Werkzeugmaschine versehenen Werkzeugaufnahmekörpers ausgebildet ist.

12. Werkzeugaufnahme nach einem der Ansprüche 1 bis 11, **dadurch gekennzeichnet, dass** auf der Außenseite des Führungsteils (9) eine Hülse (28) mit einem inneren Kühlmittelkanal (29) zur Führung eines Kühlmittels zur Außenseite eines Werkzeugs (1) angeordnet ist.

13. Werkzeugaufnahme nach Anspruch 12, **dadurch gekennzeichnet, dass** im Aufnahmeteil (8) von einem zentralen Zuleitungskanal (30) abzweigende und zur Außenseite des Aufnahmeteils (8) führende erste Querbohrungen (31) und im Führungsteil (9) mit den ersten Querbohrungen (31) fluchtende und die in den Kühlmittelkanal (29) der Hülse (28) mündende zweite Querbohrungen (32) angeordnet sind.

14. Werkzeuganordnung mit einem Einschraubwerkzeug (1) und einer Werkzeugaufnahme (2), **dadurch gekennzeichnet, dass** die Werkzeugaufnahme (2) nach einem der Ansprüche 1 bis 13 ausgebildet ist.

15. Werkzeuganordnung nach Anspruch 14, **dadurch gekennzeichnet, dass** das Einschraubwerkzeug (1) mindestens eine Anlagefläche (17) zur Anlage an der mindestens einen Führungsfläche (11) am vorderen Führungsteil (9) der Werkzeugaufnahme (2) enthält.

16. Werkzeuganordnung nach Anspruch 14 oder 15, **dadurch gekennzeichnet, dass** das Einschraubwerkzeug (1) einen Werkzeugschaft (4) mit einem zu dem Innengewinde (7) der Werkzeugaufnahme (2) korrespondierenden Außengewinde (5) enthält.

17. Werkzeuganordnung nach Anspruch 16, **dadurch gekennzeichnet, dass** am inneren Ende des Werkzeugschafts (4) eine Abstützfläche (19) vorgesehen ist.

18. Werkzeuganordnung nach Anspruch 16 oder 17, **dadurch gekennzeichnet, dass** am Werkzeugschaft (4) des Einschraubwerkzeugs (1) eine Greiferrille (20) angeordnet ist.

## Claims

1. Tool receptacle (2) for a screw-fit tool (1), having a receptacle member which contains a receptacle part (8) having a receptacle opening (6) and an internal thread (7) and a sleeve-shaped guide part (9) which is fastened on the receptacle part (8) and on which a support region having a first guide face (11) and a second guide face (15) for receiving the screw-fit tool (1) so as to be positioned accurately in the tool receptacle (2) is provided, **characterized in that** the sleeve-shaped guide part (9) at the front end thereof has a step (12) on which a rear bearing face (13) for bearing on a front end face (14) of the receptacle part (8) is provided.

2. Tool receptacle according to Claim 1, **characterized in that** the guide part (9) is releasably fastened on the receptacle part (8).

3. Tool receptacle according to Claim 1 or 2, **characterized in that** the receptacle part (8) is composed of hard metal, heavy metal, of various alloys having a vibration-damping behaviour, or from plastics material, in particular fibre-composite material.

4. Tool receptacle according to one of Claims 1 to 3, **characterized in that** the guide part (9) is configured as one part or multiple parts.

5. Tool receptacle according to one of Claims 1 to 4, **characterized in that** the guide part (9) is at least in part composed of steel.

6. Tool receptacle according to one of Claims 1 to 5, **characterized in that** the first guide face (11) and the second guide face (15) are configured as conical faces having dissimilar angles of taper.

7. Tool receptacle according to Claim 6, **characterized in that** the first guide face (11) has an angle of taper between 140° and 179°, and the second guide face has an angle of taper between 90° and 1°.

8. Tool receptacle according to one of Claims 1 to 7, **characterized in that** the guide part (9) is press-fitted or shrink-fitted onto the receptacle part (8) or is connected to the latter by a threaded connection.

9. Tool receptacle according to one of Claims 1 to 8, **characterized in that** the internal thread (7) is configured as a conical internal thread.

10. Tool receptacle according to one of Claims 1 to 9, **characterized in that** a further support region having an inner bearing face (16) for the screw-fit tool (1) is provided on the inner end of the receptacle opening (6).

11. Tool receptacle according to one of Claims 1 to 10, **characterized in that** the guide part (9) is configured in the form of a tool receptacle member which is provided with an interface for receiving in a work spindle of a machine tool.

12. Tool receptacle according to one of Claims 1 to 11, **characterized in that** a sleeve (28) having an inner coolant duct (29) for guiding a coolant toward the external side of a tool (1) is disposed on the external side of the guide part (9).

13. Tool receptacle according to Claim 12, **characterized in that** transverse bores (31) which branch off from a central supply duct (30) and lead to the external side of the receptacle part (8) are disposed in the receptacle part (8), and second transverse bores (32) which are aligned with the first transverse bores (31) and open into the coolant duct (29) of the sleeve (28) are disposed in the guide part (9).

14. Tool assembly having a screw-fit tool (1) and a tool receptacle (2), **characterized in that** the tool receptacle (2) is configured according to one of Claims 1 to 13.

15. Tool assembly according to Claim 14, **characterized in that** the screw-fit tool (1) contains at least one bearing face (17) for bearing on the at least one guide face (11) on the front guide part (9) of the tool receptacle (2).

16. Tool assembly according to Claim 14 or 15, **characterized in that** the screw-fit tool (1) contains a tool shank (4) having an external thread (5) which corresponds to the internal thread (7) of the tool receptacle (2).

17. Tool assembly according to Claim 16, **characterized in that** a support face (19) is provided at the inner end of the tool shank (4).

18. Tool assembly according to Claim 16 or 17, **characterized in that** a gripping groove (20) is disposed on the tool shank (4) of the screw-fit tool (1) .

## Revendications

1. Logement d'outil (2) pour un outil à visser (1) comprenant un corps de logement, qui contient une partie de logement (8) avec une ouverture de logement (6) et un filetage intérieur (7) et une partie de guidage en forme de gaine (9) fixée sur la partie de logement (8), sur laquelle une zone de support dotée d'une première surface de guidage (11) et d'une deuxième surface de guidage (15) pour le logement à une position précise de l'outil à visser (1) dans le logement d'outil (2) est prévue, **caractérisé en ce que** la partie de guidage en forme de gaine (9) contient au niveau de son extrémité avant une gradation (12), au niveau de laquelle une surface d'appui arrière (13) pour l'appui sur une surface frontale avant (14) de la partie de logement (8) est prévue.

2. Logement d'outil selon la revendication 1, **caractérisé en ce que** la partie de guidage (9) est fixée de manière amovible sur la partie de logement (8) .

3. Logement d'outil selon la revendication 1 ou 2, **caractérisé en ce que** la partie de logement (8) est constituée de métal dur, de métal lourd, de divers alliages à comportement d'amortissement des vibrations ou de plastique, notamment de matériau composite fibreux.

4. Logement d'outil selon l'une quelconque des revendications 1 à 3, **caractérisé en ce que** la partie de guidage (9) est configurée à une ou plusieurs parties.

5. Logement d'outil selon l'une quelconque des revendications 1 à 4, **caractérisé en ce que** la partie de guidage (9) est au moins partiellement constituée d'acier.

6. Logement d'outil selon l'une quelconque des revendications 1 à 5, **caractérisé en ce que** la première surface de guidage (11) et la deuxième surface de guidage (15) sont configurées sous la forme de surfaces coniques ayant différents angles de cône.

7. Logement d'outil selon la revendication 6, **caractérisé en ce que** la première surface de guidage (11) présente un angle de cône compris entre 140° et 179°, et la deuxième surface de guidage présente un angle de cône compris entre 90° et 1°.

8. Logement d'outil selon l'une quelconque des revendications 1 à 7, **caractérisé en ce que** la partie de guidage (9) est pressée sur la partie de logement (8), sertie ou reliée avec celle-ci par une liaison filetée.

9. Logement d'outil selon l'une quelconque des revendications 1 à 8, **caractérisé en ce que** le filetage intérieur (7) est configuré sous la forme d'un filetage intérieur conique.

10. Logement d'outil selon l'une quelconque des revendications 1 à 9, **caractérisé en ce qu'**une zone de support supplémentaire avec une surface d'appui intérieure (16) pour l'outil à visser (1) est prévue au niveau de l'extrémité intérieure de l'ouverture de logement (6).

11. Logement d'outil selon l'une quelconque des revendications 1 à 10, **caractérisé en ce que** la partie de guidage (9) est configurée sous la forme d'un corps de logement d'outil muni d'une jonction pour le logement dans une broche d'une machine d'outil.

12. Logement d'outil selon l'une quelconque des revendications 1 à 11, **caractérisé en ce qu'**une gaine (28) munie d'un canal intérieur d'agent réfrigérant (29) pour le guidage d'un agent réfrigérant vers le côté extérieur d'un outil (1) est agencée sur le côté extérieur de la partie de guidage (9).

13. Logement d'outil selon la revendication 12, **caractérisé en ce que** des premiers alésages transversaux (31) bifurquant à partir d'un canal d'alimentation central (30) et conduisant vers le côté extérieur de la partie de logement (8) sont agencés dans la partie de logement (8) et des deuxième alésages transversaux (32) alignés avec les premiers alésages transversaux (31) et débouchant dans le canal d'agent réfrigérant (29) de la gaine (28) sont agencés dans la partie de guidage (9).

14. Agencement d'outil comprenant un outil à visser (1) et un logement d'outil (2), **caractérisé en ce que** le logement d'outil (2) est configuré selon l'une quelconque des revendications 1 à 13.

15. Agencement d'outil selon la revendication 14, **caractérisé en ce que** l'outil à visser (1) contient au moins une surface d'appui (17) pour l'appui sur ladite au moins une surface de guidage (11) sur la partie de guidage avant (9) du logement d'outil (2).

16. Agencement d'outil selon la revendication 14 ou 15, **caractérisé en ce que** l'outil à visser (1) contient un arbre d'outil (4) muni d'un filetage extérieur (5) correspondant au filetage intérieur (7) du logement d'outil (2).

17. Agencement d'outil selon la revendication 16, **caractérisé en ce qu'une** surface de support (19) est prévue sur l'extrémité intérieure de l'arbre d'outil (4) .

18. Agencement d'outil selon la revendication 16 ou 17, **caractérisé en ce qu'**une gorge de préhension (20) est agencée sur l'arbre d'outil (4) de l'outil à visser (1) .
